# FASCICULE DE BREVET EUROPEEN

(11) **EP 3 179 841 B1**
(45) Date de publication et mention de la délivrance du brevet: **08.01.2020**
(21) Numéro de dépôt: 15767273.4
(22) Date de dépôt: 30.07.2015
(51) Int. Cl.: A01B 59/06

(54) **DISPOSITIF DE COUPLAGE-DÉCOUPLAGE AUTOMATIQUE POUR APPAREIL DE TRAVAIL DU SOL**
AUTOMATISCHE KOPPLUNGS-ENTKOPPLUNGSVORRICHTUNG FÜR EINE BODENBEARBEITUNGSVORRICHTUNG
AUTOMATIC COUPLING-DECOUPLING DEVICE FOR A SOIL WORKING APPARATUS

(30) Priorité: 11.08.2014 FR 1457746
(43) Date de publication de la demande: 21.06.2017
(73) Titulaire: Perrein, 51400 Dampierre-au-Temple (FR)
(72) Inventeur: DEZ, Jérôme, F-51490 Saint Martin l'Heureux (FR); DEFRANCQ, Hubert, F-02190 Guignicourt (FR); HAZOUARD, Bastien, F-10290 Avon la Peze (FR)
(74) Mandataire: IPAZ
(86) Numéro de dépôt international: PCT/IB2015/055770
(87) Numéro de publication internationale: WO 2016/024181

(56) Documents cités:
- EP-A1- 0 573 111
- DE-U1- 8 215 040
- DE-U1-202012 004 215

## Description

La présente invention concerne un dispositif de couplage-découplage automatique pour un appareil de travail du sol.

Dans le cadre des activités agricoles, le travail du sol consiste à ameublir et conditionner le sol pour favoriser la pénétration/évacuation de l'eau permettre l'incorporation des débris végétaux, faciliter la pénétration des racines des plantes utiles etc.

Pour assurer un bon contact entre la terre et la graine, et une bonne alimentation de la plantes (eau, fertilisants), il faut consolider le sol après son ameublissement.

Ce travail est réalisé au moyen d'un élément de ré-appui communément appelé rouleau. Il existe une multitude de variantes de rouleaux pour tenir compte
- du type de sol,
- de l'état du sol au moment du travail (sec, humide),
- de l'état de surface recherché qui varie selon les plantes à cultiver et la saison d'intervention,
- de la nature des débris végétaux, etc..

Il est donc difficile pour l'agriculteur de décider du rouleau idéal pour son équipement de travail du sol.

Ainsi, il est souhaitable d'adapter rapidement la configuration du rouleau aux contraintes rencontrées. Pour cela il faut pouvoir changer rapidement de rouleau.

### ETAT DE LA TECHNIQUE

Il existe de nombreuses propositions pour permettre l'accouplement rapide de pièces telles que des outils montés sur chargeurs frontaux ou des têtes de récoltes.

Ces systèmes, souvent semi automatiques, nécessitent de descendre de la cabine pilotage pour assurer le verrouillage.

Les versions à verrouillage à distance ne permettent pas de s'assurer à distance que le verrouillage est réalisé de façon sûre.

De plus les systèmes connus font souvent intervenir des perçages qui peuvent être obstrués par des débris ou de la terre séchée qui rendent le fonctionnement du dispositif de verrouillage aléatoire.

Un autre aspect à prendre en compte est de pouvoir décrocher les rouleaux et de les reprendre sans nécessiter de calage au moment du décrochage.

Le EP 2 656 709 A1 décrit un couplage rapide de rouleau qui nécessite de coupler simultanément deux structures d'accrochage qui à l'état couplé réalisent une liaison rigide entre la machine et l'outil. Ce dispositif présente des inconvénients majeurs : L'accostage pour pourvoir approcher le rouleau est très difficile. En outre le calage du rouleau pour pouvoir être accroché est compliqué car il faut que les plans de couplage de la machine et de l'outil soient parallèles. Ceci est très difficile à obtenir, en particulier si le sol n'est pas nivelé. En outre il faut stocker le rouleau en hauteur pour que l'accostage soit possible. La hauteur précise dépend de la hauteur du châssis principal car ses variations de hauteur induisent des variations d'angles qui nécessitent alors des corrections multiples avec la partie liée à la machine.

Les conditions de fabrication pour éviter les jeux excessifs sont coûteuses. Il n'est pas prévu de solution de couplage à distance. Ceci expose à un risque l'opérateur en charge de la finition de l'opération d'accouplement, qui requiert de plus un opérateur dans le tracteur pour les manœuvres d'approche.

Le document DE 82 15 040 U1 décrit un dispositif de couplage-découplage automatique d'un appareil de travail au sol avec une machine, dans lequel, par déplacement simultané de deux points de couplage situés sur la machine, un premier couplage s'effectue avec l'appareil, puis un second couplage s'opère lors du basculement de l'appareil. Toutefois, le fait que les deux points de couplage ne puissent pas se déplacer indépendamment l'un de l'autre, nécessite de verrouiller/déverrouiller le second couplage.

Un objectif de la présente invention est de remédier au moins en partie aux problèmes listés ci-dessus.

Un autre objectif est de proposer un dispositif de couplage découplage qui soit opérable depuis la cabine de pilotage de la machine ou tracteur, sans nécessiter aucune intervention directe par l'opérateur, ni dispositif de verrouillage/déverrouillage supplémentaire.

Un autre objectif encore de l'invention est de proposer un dispositif de couplage découplage qui soit opérationnel même sur sol non plan et/ou indépendamment de la hauteur de châssis de la machine.

Encore un autre objectif est de proposer un dispositif de couplage-découplage dans lequel l'appareil à coupler se présente systématiquement dans la bonne attitude pour le couplage.

De plus, un objectif de la présente invention est de proposer un dispositif de couplage-découplage dans lequel l'opération d'accostage est considérablement simplifiée.

Un autre objectif de la présente invention et de proposer un dispositif de couplage-découplage peu sensible à l'encrassement de ses organes de verrouillage.

Suivant l'invention, le dispositif de couplage-découplage automatique d'un appareil de travail du sol, en particulier un appareil ou outil agricole, encore plus particulièrement un rouleau, derrière ou devant une machine mobile sur le sol selon une direction longitudinale et reliée à une source d'énergie, le dispositif de couplage-découplage comprenant deux structures d'accrochage qui réalisent ensemble une liaison rigide lorsque le dispositif est dans un état couplé, est caractérisé en ce que :
▪ le dispositif comprend un châssis mobile monté mobile sur la machine,
▪ les structures d'accrochage comprennent une structure primaire avec un moyen d'accrochage récepteur primaire porté par le châssis mobile, et un moyen d'accrochage reçu primaire porté par l'appareil, et une structure secondaire comprenant un moyen d'accrochage récepteur secondaire associé à la machine et un moyen d'accrochage reçu secondaire porté par l'appareil,
▪ les moyens d'accrochage récepteurs primaire et secondaire sont déplaçables l'un par rapport à l'autre
▪ dans une position d'accostage du châssis mobile et une position d'attente de l'appareil, la structure primaire est capable d'atteindre par déplacement de la machine sur le sol un état d'accostage mutuel des moyens d'accrochage primaires, correspondant à un état d'accostage du dispositif,
▪ par déplacement du châssis mobile à partir de l'état d'accostage, le châssis mobile est apte à entraîner l'appareil par l'intermédiaire de la structure primaire au moins jusque dans une position préparatoire à l'accrochage mutuel des moyens d'accrochage secondaire,
▪ pour le déplacement des moyens d'accrochage récepteurs l'un par rapport à l'autre, l'un des moyens d'accrochage récepteurs est monté sur un élément d'actionnement qui est apte à être mis en mouvement à l'issue du mouvement du châssis mobile à partir de l'état d'accostage, au moyen d'un vérin et d'un ressort, ou bien au moyen d'un vérin double effet, de sorte que l'accrochage mutuel des moyens d'accrochage est réalisé par déplacement des moyens d'accrochage récepteurs l'un par rapport à l'autre.

Ainsi, avec l'invention, les deux structures d'accrochage se couplent de façon séquentielle. Au début de l'opération, l'opérateur typiquement installé aux commandes de la machine ou du tracteur auquel elle est attelée, dirige la machine pour que le moyen d'accrochage récepteur (autrement dit associé à la machine) primaire se place en position d'accostage du moyen d'accrochage reçu (associé à l'appareil) primaire. Ceci est simple à réaliser car il n'y a pas besoin de d'obtenir simultanément une correspondance de deux structures d'accrochage. Ensuite, sans quitter sa cabine de pilotage, l'utilisateur provoque le déplacement du châssis mobile pour placer automatiquement en correspondance les moyens d'accrochage secondaires. Le déplacement des moyens d'accrochage récepteurs l'un par rapport à l'autre termine le couplage. Cela peut être automatique ou commandé par l'utilisateur, mais sans que celui-ci doive quitter son poste de pilotage.

Dans un mode de réalisation préféré, pour sa mobilité, le châssis est mobile en hauteur. Ainsi, il est facile d'opérer le dispositif indépendamment de la hauteur du châssis de la machine. Il suffit de positionner convenablement le châssis mobile en hauteur pour l'opération d'accostage.

De préférence, à partir de l'état d'accostage, le mouvement du châssis réalise dans un premier temps l'accrochage mutuel des moyens d'accrochage de la structure primaire.

Suivant une disposition avantageuse, la structure primaire est agencée pour réaliser entre la machine et l'appareil une liaison pivotante autour d'un axe transversal primaire, et une partie au moins du mouvement du châssis mobile à partir de l'état d'accostage fait pivoter l'appareil autour de l'axe transversal primaire.

Typiquement, une partie au moins du mouvement du châssis à partir de l'état d'accostage provoque un pivotement gravitaire de l'appareil autour d'un axe transversal primaire défini par la structure primaire.

Dans un mode de réalisation préféré, le mouvement du châssis à partir de l'état d'accostage fait monter le moyen d'accrochage récepteur primaire. Cette particularité se combine très bien avec le mouvement gravitaire précité de l'appareil : en élevant la structure primaire et donc la région correspondante de l'appareil, on crée les conditions pour que les forces de gravité modifient l'assiette de l'appareil.

Il y a de préférence à l'état d'accostage un écart entre les moyens d'accrochage secondaires suivant la direction longitudinale. Puis le mouvement du châssis mobile et le mouvement que cela induit pour l'appareil font progressivement disparaître cet écart jusqu'à la position préparatoire à l'accrochage mutuel.

Notamment pour cela, par rapport au moyen d'accrochage reçu primaire, il est judicieux de prévoir le moyen d'accrochage reçu secondaire en position décalée vers le bas et en sens opposé au châssis mobile au moins lorsque l'appareil est en position d'attente.

Dans un mode de réalisation préféré, pendant une partie au moins du mouvement du châssis mobile à partir de l'état d'accostage, l'appareil effectue par gravité un mouvement pendulaire au cours duquel le bas de l'appareil se rapproche du châssis mobile.

De préférence, le dispositif comprend des moyens de guidage positionnés pour limiter le mouvement de l'appareil sous l'action du déplacement du châssis mobile et guider les moyens d'accrochage secondaires l'un vers l'autre jusqu'à leur accrochage mutuel. De tels moyens concourent à la précision et à la fiabilité de l'accrochage de la structure secondaire notamment en l'absence de toute intervention directe de l'opérateur.

Les moyens de guidage comprennent de préférence une rampe, en particulier une rampe coopérant avec l'un des moyens d'accrochage secondaires. Il est préféré que la rampe soit portée par le châssis mobile.

Dans un mode de réalisation avantageux, le déplacement des moyens d'accrochage récepteurs l'un par rapport à l'autre provoque un déplacement de de l'appareil avec translation en appui sur une butée. L'appareil peut aussi légèrement pivoter autour d'un axe transversal secondaire défini par l'appui de butée. Ceci permet de donner à l'appareil en fin de processus de couplage une orientation voulue autour de la direction transversale, indépendamment des manipulations nécessaires au couplage.

En particulier lorsque le mouvement du châssis mobile a fait pivoter l'appareil autour de l'axe primaire défini par la structure primaire, le pivotement de l'appareil autour de l'axe secondaire est typiquement en sens contraire du pivotement autour de l'axe primaire.

De préférence le dispositif comprend un ressort assurant le déplacement des moyens d'accrochage récepteurs l'un par rapport à l'autre en direction de l'état couplé du dispositif, où un élément de l'appareil est assujetti à la machine. Ce ressort absorbe les incertitudes dimensionnelles et les jeux de couplage qui pourraient exister entre la machine et l'appareil.

On pourrait imaginer que le déplacement des deux moyens d'accrochage récepteurs l'un par rapport à l'autre soit obtenu du fait que l'un des moyens d'accrochage serait monté sur le châssis mobile et l'autre sur la machine indépendamment du châssis mobile. Mais il est préféré, pour le déplacement mutuel des moyens d'accrochage récepteurs, que l'un des moyens d'accrochage récepteurs primaire soit monté sur un élément d'actionnement qui est mis en mouvement à l'issue du mouvement du châssis mobile à partir de l'état d'accostage.

De façon particulièrement préférée, l'élément d'actionnement relie de façon mobile le moyen d'accrochage récepteur qu'il porte, avec le châssis mobile. De cette façon au moins une grande partie des composants du dispositif côté machine sont portés par le châssis mobile.

Typiquement, le châssis mobile est relié à la machine par une articulation selon un axe transversal de châssis et par un actionneur primaire agencé pour faire pivoter le châssis mobile autour de l'axe transversal de châssis.

A l'état couplé du dispositif, l'actionneur primaire est avantageusement utilisable pour régler la hauteur de travail de l'appareil.

Sur l'appareil, le dispositif comprend des moyens d'appui au sol qui définissent la position d'attente de l'appareil, convenant pour la réalisation de l'état d'accostage.

Dans la position d'attente le centre de gravité de l'appareil est avantageusement décalé en direction opposée à la machine par rapport à un plan vertical transversal passant par le moyen d'accrochage reçu primaire.

D'autres particularités et avantages de l'invention ressortiront encore de la description ci-après, relative à des exemples non-limitatifs.

Aux dessins annexés :
- les figures 1 à 5 sont des schémas en élévation d'un premier mode de réalisation du dispositif selon l'invention, dans cinq états fonctionnels successifs, à savoir respectivement l'état d'approche, l'état d'accostage, l'état de butée, l'état couplé, et l'état de service ; et
- la figure 6 est un schéma en élévation d'un deuxième mode de réalisation du dispositif selon l'invention, à l'état couplé.

Les modes de réalisation qui vont être décrits n'étant nullement limitatifs, il doit être bien entendu que la description qui suit vaut description de toute particularité qu'elle contient, indépendamment des autres particularités, même citées dans le même paragraphe ou la même phrase. En outre, chaque particularité est ici visée non seulement telle que décrite, mais également sous n'importe quelle forme plus ou moins généralisée et/ou dans n'importe quelle combinaison avec au moins une autre particularité décrite, généralisée ou non, dès lors que la généralisation de cette particularité et/ou sa combinaison comme indiqué ci-dessus fait sens pour l'obtention d'un effet technique ou pour distinguer l'invention par rapport à l'art antérieur.

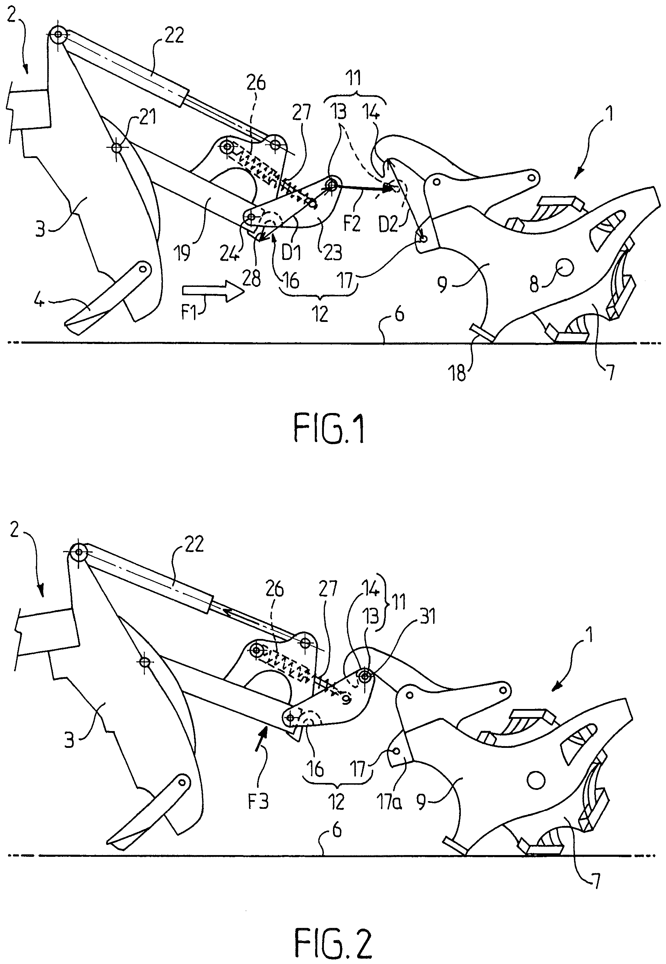

Dans le mode de réalisation représenté aux figures 1 à 5, il s'agit d'accoupler et de découpler un appareil 1 à une machine 2 qui n'est que partiellement représentée. De la machine 2, on aperçoit une extrémité de son châssis porteur 3, ainsi qu'une rangée transversale de socs 4 (un seul est visible) pour le labour du sol, mais qui sont ici relevés au-dessus du sol 6. Le bâti 3 de la machine 2 est, en général, attaché à un dispositif de relevage trois points (arrière ou avant) d'un tracteur agricole. Lorsque la machine 2 et l'appareil 1 sont accouplés, le bâti 3 supporte aussi bien la machine 2 que l'appareil 1. La machine 2 peut comporter des moyens d'appui au sol qui ne sont pas représentés.

L'appareil 1 est ici, de manière typique, un rouleau de ré-appui ayant pour fonction d'égaliser et densifier le sol de manière convenable juste après le labour par les socs 4. Le rouleau 1 comprend un outil de forme générale cylindrique 7 ayant un axe horizontal transversal 8 autour duquel il est mobile en rotation relativement à un cadre 9.

Le dispositif de couplage-découplage comprend deux structures d'accrochage, à savoir une structure primaire 11 et une structure secondaire 12.

Chacune des structures primaire et secondaire comprend un moyen d'accrochage associé à la machine 2 et un moyen d'accrochage associé à l'appareil 1. On appelle par convention « récepteur» un moyen d'accrochage associé à la machine, et « reçu » un moyen d'accrochage associé à l'appareil.

Ces structures sont prévues avantageusement par paire, de préférence symétriques par rapport à l'axe médian de progression, pour assurer une bonne stabilité transversale.

La structure primaire 11 comprend ainsi un moyen d'accrochage récepteur primaire 13 associé à la machine 2 et un moyen d'accrochage reçu primaire 14 associé à l'appareil 1.

De façon similaire, la structure secondaire 12 comprend un moyen d'accrochage récepteur secondaire 16 associé à la machine 2 et un moyen d'accrochage reçu secondaire 17 associé à l'appareil 1.

Les moyens d'accrochage reçus 14 et 17 sont solidaires du cadre 9 de l'appareil 1.

Le moyen d'accrochage reçu primaire 14 peut être avantageusement réalisé sous forme d'un crochet tournant sa concavité vers le bas, ce qui facilite l'évacuation des dépôts de terre ou de détritus, tandis que le moyen d'accrochage récepteur primaire 13 peut être constitué par un axe transversal.

Le moyen d'accrochage récepteur 16 peut être avantageusement réalisé sous forme d'un crochet tournant sa concavité vers le bas, tandis que le moyen d'accrochage reçu secondaire 17 peut être constitué par un axe transversal.

Le cadre 9 n'est pas équilibré autour de l'axe de rotation 8 de l'outil 7. Il porte un patin 18 qui du fait de ce déséquilibre se met systématiquement en appui sur le sol 6 lorsque l'appareil 1 est découplé de la machine 2.

Ainsi, l'appareil découplé prend systématiquement la position d'attente représentée à la figure 1, dans laquelle les moyens d'accrochage reçus 14 et 17 sont à une hauteur bien déterminée au-dessus du sol 6.

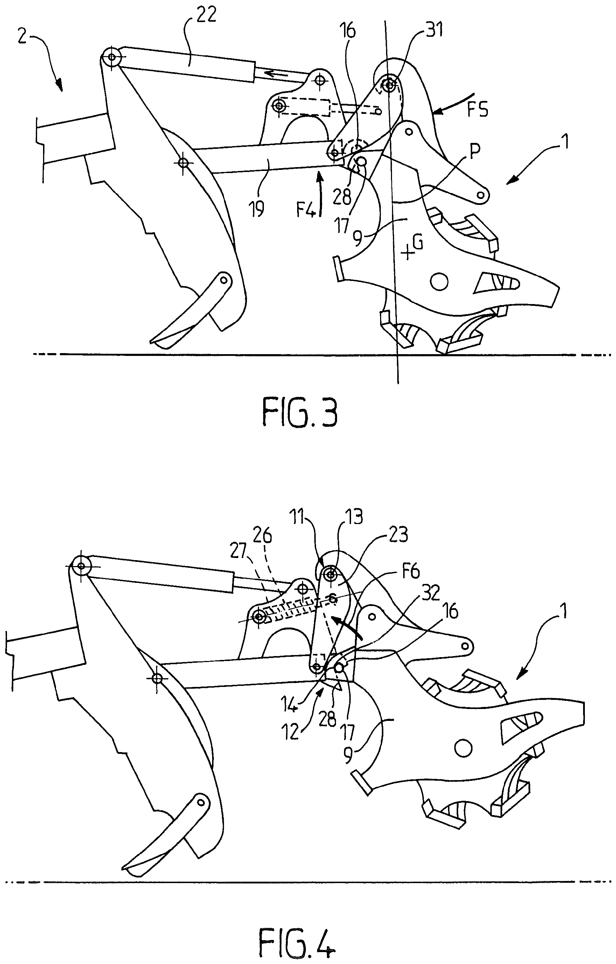

Les moyens d'accrochage récepteurs 13 et 16 sont portés par un châssis mobile 19 qui est articulé au châssis porteur 3 de la machine 2 selon un axe transversal de châssis 21. Le châssis mobile 19 est ainsi mobile en hauteur comme on peut le voir en comparant par exemple les figures 1 et 3. Un actionneur primaire 22, ici sous la forme d'un vérin hydraulique, monté entre le châssis porteur 3 et le châssis mobile 19, permet de déplacer en hauteur le châssis mobile 19 autour de l'axe transversal de châssis 21.

En outre, les moyens d'accrochage récepteurs 13 et 16 sont déplaçables l'un par rapport à l'autre. Dans l'exemple représenté, le moyen d'accrochage récepteur secondaire 16 est solidaire du châssis mobile 19. Par contre, le moyen d'accrochage récepteur primaire 13 est installé à une extrémité mobile d'un élément d'actionnement 23 qui est articulé au châssis mobile 19 selon un axe transversal 24. Pour le déplacement du moyen d'accrochage récepteur primaire 13 par rapport au moyen d'accrochage récepteur secondaire 16, l'élément d'actionnement 23 peut être déplacé autour de l'axe 24 grâce à un vérin double effet (assurant extension et rétraction) ou grâce à un vérin simple effet d'extension 26 dans un sens, et grâce à un ressort de rappel de traction 27 dans l'autre sens.

Lorsque l'élément d'actionnement 23 est dans la position d'extension représentée à la figure 1, la distance nominale entre les deux moyens d'accrochage récepteurs 13 et 16 est inférieure à celle entre les deux moyens d'accrochage reçus 14 et 17. Le moyen d'accrochage récepteur secondaire 16 est prolongé en direction sensiblement opposée au moyen d'accrochage récepteur primaire 13, par une rampe de guidage formant butée 28. L'extrémité distale de la rampe 28 est à une distance D1 du moyen d'accrochage récepteur primaire 13 lorsque l'élément d'actionnement 23 est en position d'extension (figures 1 et 2). La distance D1 est au moins égale ou de préférence légèrement supérieure à la distance D2 entre les moyens d'accrochage reçus 14 et 17.

Pour réaliser le couplage, l'appareil 1 étant en position d'attente comme représenté à la figure 1, on place le châssis mobile 19 en position basse grâce au vérin primaire 22. La position basse est réglable grâce au vérin 22 pour que le moyen d'accrochage récepteur primaire 13 soit sensiblement au niveau ou un peu en dessous du moyen d'accrochage reçu primaire 14.

Les deux moyens d'accrochage secondaires 16 et 17 sont beaucoup plus éloignés l'un de l'autre que les deux moyens d'accrochage primaires 13 et 14 dans cet état du dispositif.

En particulier, l'élément d'actionnement 23 est en position d'extension qui rapproche les deux moyens d'accrochage primaires 13 et 14 l'un de l'autre.

Le basculement du châssis mobile 19 dans sa position basse contribue également à cela.

L'attitude du cadre 9 de l'appareil en position d'attente a aussi cet effet d'éloignement relatif des moyens d'accrochage secondaires 16 et 17.

Chaque moyen d'accrochage secondaire, récepteur 16 ou reçu 17, est décalé en direction opposée à l'autre moyen d'accrochage secondaire par rapport à une verticale passant par le moyen d'accrochage primaire associé, récepteur 13 ou reçu 14 respectivement.

D'une manière générale, la relation géométrique est telle que les moyens d'accrochage primaires vont se rencontrer avant les moyens d'accrochage secondaires lorsque le conducteur de la machine 3 va faire progresser celle-ci sur le sol 6 en direction de l'appareil 1.

Les moyens d'accrochage primaires 13 et 14 sont placés plus haut que les moyens d'accrochage secondaires 16 et 17 pour assurer un fonctionnement stable.

A partir de la situation représentée à figure 1, le pilote de la machine 2 fait progresser celle-ci sur le sol 6 comme illustré par la flèche F1. Du fait de ce mouvement, le moyen d'accrochage récepteur primaire 13 vient dans la position d'accostage représentée en pointillés à la figure 1, son mouvement étant noté par la flèche F2. Dans la position d'accostage les moyens d'accrochage primaires 13 et 14 sont en regard très proche l'un de l'autre, positionnés au mieux pour s'inter-engager.

Ensuite, un automatisme ou le pilote de la machine 2 installé dans son poste de pilotage (non représenté), commande l'actionneur primaire 22 dans le sens de la montée (flèche F3) du châssis mobile 19 (figure 2). Les deux moyens d'accrochage primaire 13 et 14 s'accrochent mutuellement dans le sens où le châssis mobile 19 se prépare à soulever le cadre 9 de l'appareil 1.

Comme le montre la figure 3, la montée du châssis mobile 19 se poursuit (flèche F4), toujours commandée par l'actionneur 22. Le châssis mobile 19 soulève le cadre 9 de l'appareil 1, lequel pivote (flèche F5) autour d'un axe transversal primaire 31 défini par la liaison pivotante des moyens d'accrochage primaires 13 et 14 entre eux. Le pivotement a lieu dans le sens qui rapproche mutuellement les moyens d'accrochage secondaires 16 et 17.

Ce sens de pivotement résulte du fait que le centre de gravité G de l'appareil 1 autour de l'axe transversal primaire 31 est situé du côté opposé à la machine 2 par rapport à un plan vertical P passant par l'axe transversal primaire 31.

Le pivotement autour de l'axe transversal primaire 31 est interrompu lorsque le moyen d'accrochage reçu secondaire 17 bute contre la rampe 28. C'est la situation représentée à la figure 3. C'est l'état dit « de butée ».

A ce stade, un automatisme ou le pilote de la machine 2 installé à son poste de pilotage commande la rétraction du vérin secondaire double effet ou relâchement du vérin secondaire simple effet 26 pour permettre au ressort 27 de ramener l'élément d'actionnement 23 (flèche F6 à la figure 4).

Ce mouvement éloigne l'un de l'autre les deux moyens d'accrochage récepteurs 13 et 14 de sorte que le moyen d'accrochage reçu secondaire 17 est contraint de glisser le long de la butée 28 jusqu'à être engagé sans jeu, par en dessous, avec le moyen d'accrochage récepteur secondaire 16. La pression de rétraction dans le vérin en version double effet, ou le ressort 27 dans la version simple effet du vérin 26, maintient les deux structures d'accrochage 11 et 12 en tension l'une par rapport à l'autre.

Le mouvement de l'élément d'actionnement 23 selon la flèche F6 a fait pivoter l'appareil 1 autour de l'axe transversal secondaire défini par l'appui de butée entre les moyens d'accrochage secondaire. Ce pivotement a soulevé l'appareil 1 et s'est exercé en sens contraire de celui décrit autour de l'axe transversal primaire 31 entre la position d'accostage et la position de butée. Ainsi, l'appareil 1 retrouve une orientation convenable pour le travail du sol.

A ce stade, le châssis mobile 19 et le cadre 9 de l'appareil 1 sont rigidement solidaires. Le pilote de la machine 2 peut grâce à l'actionneur 22 placer l'appareil 1 en position de travail et régler finement sa hauteur de travail, ou encore libérer l'actionneur 22 pour laisser l'outil 7 reposer librement sur le sol.

Les opérations sensiblement inverses de celles décrites, exécutées dans l'ordre inverse, permettent le désaccouplement.

L'axe 17 est avantageusement monté sur des tampons amortisseurs 17a (Fig.2), présentant une certaine élasticité, à chacune de ses extrémités ce qui permet d'absorber les tolérances de fabrication.

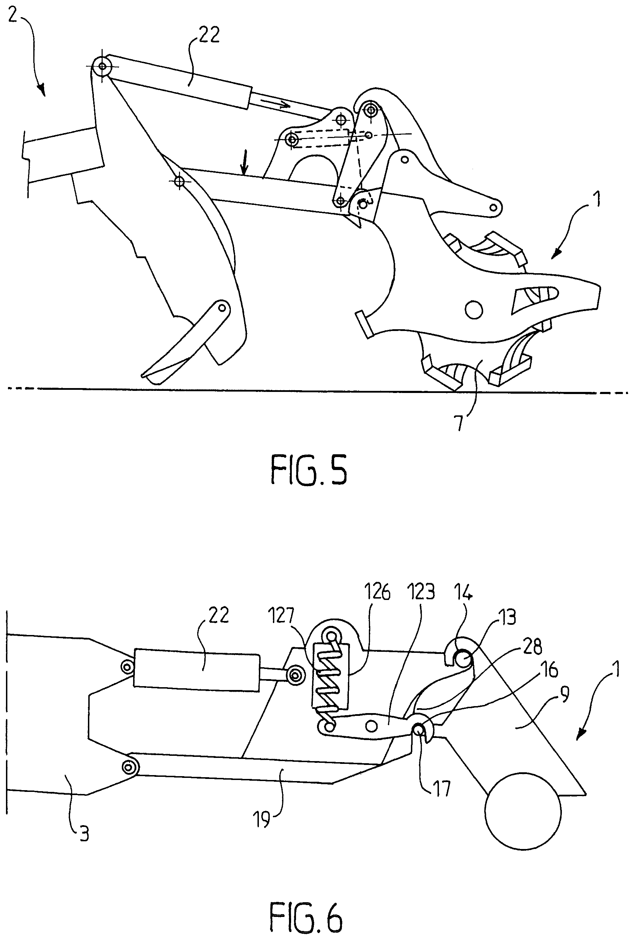

Le mode de réalisation de la figure 6 ne sera décrit que pour ses différences avec celui des figures 1 à 5.

Pour le déplacement des deux moyens d'accrochage récepteurs 13 et 16 l'un par rapport à l'autre, c'est maintenant le moyen d'accrochage récepteur secondaire 16 qui est porté par un élément d'actionnement 123, là encore actionné par un vérin secondaire 126 dans le sens permettant l'approche mutuelle des moyens de verrouillage secondaires 16 et 17, et par un ressort de traction 127 dans le sens du verrouillage des moyens d'accrochage à l'état couplé. Le moyen récepteur primaire 13 est solidaire du châssis mobile 19.

Comme dans l'exemple précédent, la rampe 28 formant butée est directement solidaire du châssis mobile 19.

Bien entendu, l'invention n'est pas limitée aux modes de réalisations décrits et représentés. On peut remplacer le couple vérin 26 et ressort 27 (ou 126-127), par un vérin à double effet.

## Revendications

1. Dispositif de couplage-découplage automatique d'un appareil de travail du sol (1), en particulier un appareil ou outil agricole, encore plus particulièrement un rouleau, derrière ou devant une machine (2) mobile sur le sol (6) selon une direction longitudinale et reliée à une source d'énergie, le dispositif de couplage-découplage comprenant deux structures d'accrochage (11, 12) qui réalisent ensemble une liaison rigide lorsque le dispositif est dans un état couplé, **caractérisé en ce que** :
▪ le dispositif comprend un châssis mobile (19) monté mobile sur la machine (2),
▪ les structures d'accrochage comprennent une structure primaire (11) avec un moyen d'accrochage récepteur primaire (13) porté par le châssis mobile (19), et un moyen d'accrochage reçu primaire (14) porté par l'appareil (1), et une structure secondaire (12) comprenant un moyen d'accrochage récepteur secondaire (16) associé à la machine (2) et un moyen d'accrochage reçu secondaire (17) porté par l'appareil (1),
▪ les moyens d'accrochage récepteurs primaire (13) et secondaire (16) sont déplaçables l'un par rapport à l'autre,
▪ dans une position d'accostage du châssis mobile (19) et une position d'attente de l'appareil (1), la structure primaire (11) est capable d'atteindre par déplacement de la machine (2) sur le sol (6) un état d'accostage mutuel des moyens d'accrochage primaires (13, 14), correspondant à un état d'accostage du dispositif,
▪ par déplacement du châssis mobile (19) à partir de l'état d'accostage, le châssis mobile (19) est apte à entraîner l'appareil (1) par l'intermédiaire de la structure primaire (11) au moins jusque dans une position préparatoire à l'accrochage mutuel des moyens d'accrochage secondaire (16, 17),
▪ pour le déplacement des moyens d'accrochage récepteurs (13, 16) l'un par rapport à l'autre, l'un des moyens d'accrochage récepteurs est monté sur un élément d'actionnement (23, 123) qui est apte à être mis en mouvement à l'issue du mouvement du châssis mobile (19) à partir de l'état d'accostage, au moyen d'un vérin (26, 126) et d'un ressort (27, 127), ou bien au moyen d'un vérin double effet, de sorte que l'accrochage mutuel des moyens d'accrochage (16, 17) est réalisé par déplacement des moyens d'accrochage récepteurs (13, 16) l'un par rapport à l'autre.

2. Dispositif selon la revendication 1, **caractérisé en ce que** le châssis mobile (19) est mobile en hauteur.

3. Dispositif selon la revendication 2, **caractérisé en ce qu'**à partir de l'état d'accostage, le mouvement du châssis mobile (19) réalise dans un premier temps l'accrochage mutuel des moyens d'accrochage (13, 14) de la structure primaire (11).

4. Dispositif selon l'une des revendications 1 à 3, **caractérisé en ce que** la structure primaire (11) est agencée pour réaliser entre la machine (2) et l'appareil (1) une liaison pivotante autour d'un axe transversal primaire (31), et **en ce qu'**une partie au moins du mouvement du châssis mobile (19) à partir de l'état d'accostage fait pivoter l'appareil (1) autour de l'axe transversal primaire (31).

5. Dispositif selon l'une des revendications 1 à 3, **caractérisé en ce que** le mouvement du châssis mobile (19) à partir de l'état d'accostage provoque un pivotement gravitaire de l'appareil (1) autour d'un axe transversal primaire (31) défini par la structure primaire (11).

6. Dispositif selon l'une des revendications 1 à 5, **caractérisé en ce que** le mouvement du châssis mobile (19) à partir de l'état d'accostage fait monter le moyen d'accrochage récepteur primaire (13).

7. Dispositif selon l'une des revendications 1 à 6, **caractérisé en ce que** par rapport au moyen d'accrochage reçu primaire (14), le moyen d'accrochage reçu secondaire (17) est décalé vers le bas et en sens opposé au châssis mobile (19) au moins lorsque l'appareil (1) est en position d'attente.

8. Dispositif selon la revendication 1 à 7, **caractérisé en ce que** pendant une partie au moins du mouvement du châssis mobile (19) à partir de l'état d'accostage, l'appareil (1) effectue par gravité un mouvement pendulaire au cours duquel le bas de l'appareil (1) se rapproche du châssis mobile (19).

9. Dispositif selon l'une des revendications 1 à 8, **caractérisé en ce qu'**il comprend des moyens de guidage (28) positionnés pour limiter le mouvement de l'appareil (1) sous l'action du déplacement du châssis mobile (19) et guider les moyens d'accrochage secondaires (16, 17) l'un vers l'autre jusqu'à leur accrochage mutuel.

10. Dispositif selon la revendication 9, **caractérisé en ce que** les moyens de guidage comprennent une rampe de guidage formant butée (28).

11. Dispositif selon la revendication 10, **caractérisé en ce que** la rampe (28) coopère avec l'un des moyens d'accrochage secondaires.

12. Dispositif selon la revendication 11, **caractérisé en ce que** la rampe (28) est portée par le châssis mobile (19).

13. Dispositif selon l'une des revendications 9 à 12, **caractérisé en ce que** le déplacement des moyens d'accrochage récepteurs (13, 16) l'un par rapport à l'autre provoque un déplacement de l'appareil (1) avec translation en appui sur une rampe de guidage formant butée (28).

14. Dispositif selon la revendication 13 en combinaison avec l'une des revendications 4 et 5, **caractérisé en ce que** ledit déplacement de l'appareil (1) est un pivotement autour d'un axe secondaire (32) en sens contraire du pivotement autour de l'axe primaire (31).

15. Dispositif selon l'une des revendications 1 à 14, **caractérisé en ce qu'**il comprend un ressort (27, 127) assurant le déplacement des moyens d'accrochage récepteurs (13, 16) l'un par rapport à l'autre en direction de l'état couplé du dispositif, où un élément de l'appareil est assujetti à la machine.

16. Dispositif selon la revendication 1, **caractérisé en ce que** l'élément d'actionnement (123) relie de façon mobile le moyen d'accrochage récepteur (16) qu'il porte, avec le châssis mobile (19).

17. Dispositif selon l'une des revendications 1 à 16, **caractérisé en ce que** le châssis mobile (19) est relié à la machine par une articulation selon un axe transversal de châssis (21) et par un actionneur primaire (22) agencé pour faire pivoter le châssis mobile autour de l'axe transversal de châssis.

18. Dispositif selon la revendication 17, **caractérisé en ce qu'**à l'état couplé du dispositif, l'actionneur primaire (22) est utilisable pour régler la hauteur de travail de l'appareil (1).

19. Dispositif selon l'une des revendications 1 à 18, **caractérisé en ce qu'**il comprend pour l'appareil (1) des moyens (18) d'appui au sol qui définissent la position d'attente de l'appareil, convenant pour la réalisation de l'état d'accostage.

20. Dispositif selon la revendication 19, **caractérisé en ce que** dans la position d'attente le centre de gravité (G) de l'appareil (1) est décalé en direction opposée à la machine (2) par rapport à un plan vertical transversal (P) passant par le moyen d'accrochage reçu (14) primaire.

## Patentansprüche

1. Vorrichtung zum automatischen Ankuppeln und Abkuppeln eines Bodenbearbeitungsgeräts (1), insbesondere eines landwirtschaftlichen Geräts oder Werkzeugs, noch genauer gesagt einer Walze, hinter oder vor einer in Längsrichtung auf dem Boden (6) bewegbaren und mit einer Energiequelle verbundenen Maschine (2), wobei die Vorrichtung zum automatischen Ankuppeln und Abkuppeln zwei Einhängestrukturen (11, 12) aufweist, die zusammen eine starre Verbindung bilden, wenn sich die Vorrichtung in einem angekuppelten Zustand befindet, **dadurch gekennzeichnet, dass**
▪ die Vorrichtung ein bewegbares Chassis (19) aufweist, das bewegbar an der Maschine (2) angebracht ist,
▪ die Einhängestrukturen eine primäre Struktur (11) mit einer primären aufnehmenden Einhängestruktur (13), die von dem mobilen Chassis (19) getragen ist, und einer primären aufgenommenen Einhängestruktur (14), die von dem Gerät (1) getragen ist, und eine sekundäre Struktur (12) mit einer sekundären aufnehmenden Einhängestruktur (16), die der Maschine (2) zugeordnet ist, und einer sekundären aufgenommenen Einhängestruktur (17), die von dem Gerät (1) getragen ist, aufweist,
▪ die primäre (13) und die sekundäre (16) aufnehmende Einhängestruktur in Bezug zueinander verschiebbar sind,
▪ die primäre Struktur (11) in einer Andockposition des bewegbaren Chassis (19) und einer Warteposition des Geräts (1) in der Lage ist, durch Bewegen der Maschine (2) auf dem Boden (6) einen gegenseitigen Andockzustand der primären Einhängeeinrichtungen (13, 14) zu erreichen, der einem Andockzustand der Vorrichtung entspricht,
▪ das mobile Chassis (19) durch Bewegen des mobilen Chassis (19) aus dem Andockzustand in der Lage ist, das Gerät (1) mittels der primären Struktur (11) zumindest bis in eine Vorbereitungsposition für das gegenseitige Einhängen der sekundären Einhängeeinrichtungen (16, 17) anzutreiben,
▪ eine der aufnehmenden Einhängeeinrichtungen zum Bewegen der aufnehmenden Einhängeeinrichtungen (13, 16) in Bezug zueinander an einem Betätigungselement (23, 123) angebracht ist, welches in der Lage ist, nach Abschluss der Bewegung des mobilen Chassis (19) aus dem Andockzustand, mittels eines Zylinders (26, 126) und einer Feder (27, 127) oder eines doppeltwirkenden Zylinders derart in Bewegung versetzt zu werden, dass das gegenseitige Einhängen der Einhängeeinrichtungen (16, 17) durch das Bewegen der aufnehmenden Einhängeeinrichtungen (13, 16) in Bezug zueinander erfolgt.

2. Vorrichtung nach Anspruch 1, **dadurch gekennzeichnet, dass** das mobile Chassis (19) in der Höhe bewegbar ist.

3. Vorrichtung nach Anspruch 2, **dadurch gekennzeichnet, dass** die Bewegung des mobilen Chassis (19) aus dem Andockzustand heraus zunächst das gegenseitige Einhängen der Einhängeeinrichtungen (13, 14) der primären Struktur (11) bewirkt.

4. Vorrichtung nach einem der Ansprüche 1 bis 3, **dadurch gekennzeichnet, dass** die primäre Struktur (11) dazu angeordnet ist, um zwischen der Maschine (2) und dem Gerät (1) eine Schwenkverbindung um eine primäre Querachse (31) zu realisieren, und dass zumindest ein Teil der Bewegung des mobilen Chassis (19) aus dem Andockzustand das Schwenken des Geräts (1) um die primäre Querachse (31) bewirkt.

5. Vorrichtung nach einem der Ansprüche 1 bis 3, **dadurch gekennzeichnet, dass** die Bewegung des mobilen Chassis aus der Andockposition ein schwerkraftbedingtes Schwenken des Geräts (1) um eine durch die primäre Struktur (11) definierte primäre Querachse (31) bewirkt.

6. Vorrichtung nach einem der Ansprüche 1 bis 5, **dadurch gekennzeichnet, dass** die Bewegung des mobilen Chassis aus der Andockposition die primäre aufnehmende Einhängeeinrichtung (13) aufwärts bewegt.

7. Vorrichtung nach einem der Ansprüche 1 bis 6, **dadurch gekennzeichnet, dass** die sekundäre aufgenommene Einhängeeinrichtung (17), zumindest wenn sich das Gerät (1) in der Warteposition befindet, in Bezug auf die primäre aufgenommene Einhängeeinrichtung (14) nach unten und zu dem mobilen Chassis (19) entgegengesetzt versetzt ist.

8. Vorrichtung nach einem der Ansprüche 1 bis 7, **dadurch gekennzeichnet, dass** das Gerät (1), zumindest während eines Teils der Bewegung des mobilen Chassis (19) aus dem Andockzustand, schwerkraftbedingt eine Pendelbewegung ausführt, in deren Verlauf der untere Teil des Geräts (1) sich dem mobilen Chassis (19) nähert.

9. Vorrichtung nach einem der Ansprüche 1 bis 8, **dadurch gekennzeichnet, dass** sie Führungseinrichtungen (28) aufweist, die dazu angeordnet sind, um die Bewegung des Geräts (1) unter Einwirkung des Bewegens des mobilen Chassis (19) zu begrenzen und die sekundären Einhängeeinrichtungen (16, 17) bis zum gegenseitigen Einhängen derselben aufeinander zu zu führen.

10. Vorrichtung nach Anspruch 9, **dadurch gekennzeichnet, dass** die Führungseinrichtungen eine Führungsrampe aufweisen, die einen Anschlag (28) bildet.

11. Vorrichtung nach Anspruch 10, **dadurch gekennzeichnet, dass** die Rampe (18) mit einer der sekundären Einhängeeinrichtungen zusammenwirkt.

12. Vorrichtung nach Anspruch 11, **dadurch gekennzeichnet, dass** die Rampe (28) von dem mobilen Chassis (19) getragen ist.

13. Vorrichtung nach einem der Ansprüche 9 bis 12, **dadurch gekennzeichnet, dass** das Bewegen der aufnehmenden Einhängeeinrichtungen (13, 16) in Bezug zueinander ein Bewegen des Geräts (1) durch Verschiebung unter Abstützung auf einer einen Anschlag (28) bildenden Führungsrampe bewirkt.

14. Vorrichtung nach Anspruch 13 in Kombination mit einem der Ansprüche 4 und 5, **dadurch gekennzeichnet, dass** das Bewegen des Geräts (1) ein Schwenken um eine sekundäre Achse (32) in zu dem Schwenken um die primäre Achse (31) entgegengesetzter Richtung ist.

15. Vorrichtung nach einem der Ansprüche 1 bis 14, **dadurch gekennzeichnet, dass** sie eine Feder (27, 127) aufweist, welche das Bewegen der aufnehmenden Einhängeeinrichtungen (13, 16) in Bezug zueinander in Richtung des angekuppelten Zustands der Vorrichtung gewährleistet, in welchem ein Element des Geräts an der Maschine befestigt ist.

16. Vorrichtung nach Anspruch 1, **dadurch gekennzeichnet, dass** das Betätigungselement (123) die von diesem getragene aufnehmende Einhängeeinrichtung (16) mit dem mobilen Chassis (19) verbindet.

17. Vorrichtung nach einem der Ansprüche 1 bis 16, **dadurch gekennzeichnet, dass** das mobile Chassis (19) mit der Maschine durch ein Gelenk entlang einer Querachse des Chassis (21) und durch einen primären Aktuator (22) verbunden ist, der zum Verschwenken des mobilen Chassis um die Querachse des Chassis angeordnet ist.

18. Vorrichtung nach Anspruch 17, **dadurch gekennzeichnet, dass** der primäre Aktuator (22) im angekuppelten Zustand zum Regeln der Arbeitshöhe des Geräts (1) verwendbar ist.

19. Vorrichtung nach Anspruch 1 bis 18, **dadurch gekennzeichnet, dass** sie für das Gerät (1) Einrichtungen (18) zum Abstützen auf dem Boden aufweist, welche die Warteposition des Geräts definieren, welche für die Realisierung des Andockzustands geeignet ist.

20. Vorrichtung nach Anspruch 19, **dadurch gekennzeichnet, dass** in der Warteposition der Schwerpunkt (G) des Geräts (1) in Bezug auf eine vertikale querverlaufende Ebene (P), die durch die primäre aufgenommene Einhängeeinrichtung (14) verläuft, in zu der Maschine (2) entgegengesetzter Richtung versetzt ist.

## Claims

1. An automatic coupling-decoupling device for a soil working apparatus (1), in particular an agricultural apparatus or tool, still more particularly a roller, behind or in front of a machine (2) moving on the soil (6) along a longitudinal direction and connected to an energy source, the coupling-decoupling device comprising two hitching structures (11, 12) which make a rigid link together when the device is in a coupled state, **characterised in that**:
▪ the device comprises a movable frame (19) movably mounted on the machine (2),
▪ the hitching structures comprise a primary structure (11) with a primary receiving hitching means (13) carried by the movable frame (19), and a primary received hitching means (14) carried by the apparatus (1), and a secondary structure (12) comprising a secondary receiving hitching means (16) associated with the machine (2) and a secondary received hitching means (17) carried by the apparatus (1),
▪ the primary (13) and secondary (16) receiving hitching means are displaceable with respect to each other,
▪ in a docking position of the movable frame (19) and a standby position of the apparatus (1), the primary structure (11) is capable of reaching by displacing the machine (2) on the soil (6) a mutual docking state of the primary hitching means (13, 14), corresponding to a docking state of the device,
▪ by displacing the movable frame (19) from the docking state, the movable frame (19) is able to drive the apparatus (1) through the primary structure (11) at least up to a preparatory position for mutually hitching the secondary hitching means (16, 17),
▪ for displacing the receiving hitching means (13, 16) with respect to each other, one of the receiving hitching means is mounted on an actuating element (23, 123) which is able to be moved at the end of the movement of the movable frame (19) from the docking state, by means of a jack (26, 126) and of a spring (27, 127), or by means of a double acting jack, so that the mutual hitching of the hitching means (16, 17) is performed by displacing the receiving hitching means (13, 16) with respect to each other.

2. The device according to claim 1, **characterised in that** the movable frame (19) is movable in height.

3. The device according to claim 2, **characterised in that** from the docking state, the movement of the movable frame (19) first performs mutual hitching of the hitching means (13, 14) of the primary structure (11).

4. The device according to one of claims 1 to 3, **characterised in that** the primary structure (11) is arranged to make between the machine (2) and the apparatus (1) a swivelling connection about a primary transverse axis (31), and **in that** at least one part of the movement of the movable frame (19) from the docking state swivels the apparatus (1) about the primary transverse axis (31).

5. The device according to one of claims 1 to 3, **characterised in that** the movement of the movable frame (19) from the docking state causes a gravitational swivel of the apparatus (1) about a primary transverse axis (31) defined by the primary structure (11).

6. The device according to one of claims 1 to 5, **characterised in that** the movement of the movable frame (19) from the docking state rises the primary receiving hitching means (13).

7. The device according to one of claims 1 to 6, **characterised in that**, with respect to the primary received hitching means (14), the secondary received hitching means (17) is downwardly offset in an opposite direction to the movable frame (19) at least when the apparatus (1) is in a standby position.

8. The device according to claims 1 to 7, **characterised in that** during at least part of the movement of the movable frame (19) from the docking state, the apparatus (1) performs by gravity a pendular movement during which the bottom of the apparatus (1) moves closer to the movable frame (19).

9. The device according to one of claims 1 to 8, **characterised in that** it comprises guide means (28) positioned to limit movement of the apparatus (1) under the action of the displacement of the movable frame (19) and to guide the secondary hitching means (16, 17) towards each other until they are mutually hitched.

10. The device according to claim 9, **characterised in that** the guide means comprise a stop-forming guide ramp (28) .

11. The device according to claim 10, **characterised in that** the ramp (28) cooperates with one of the secondary hitching means.

12. The device according to claim 11, **characterised in that** the ramp (28) is carried by the movable frame (19).

13. The device according to one of claims 9 to 12, **characterised in that** displacing the receiving hitching means (13, 16) with respect to each other causes a displacement of the apparatus (1) with a translation bearing on a stop-forming guide ramp (28).

14. The device according to claim 13 in combination with one of claims 4 and 5, **characterised in that** said displacement of the apparatus (1) is a swivel about a secondary axis (32) in the opposite direction to the swivel about the primary axis (31).

15. The device according to one of claims 1 to 14, **characterised in that** it comprises a spring (27, 127) providing displacement of the receiving hitching means (13, 16) with respect to each other towards coupled state of the device, where an element of the apparatus is secured to the machine.

16. The device according to claim 1, **characterised in that** the actuating element (123) movably connects the receiving hitching means (16) it carries, to the movable frame (19).

17. The device according to one of claims 1 to 16, **characterised in that** the movable frame (19) is connected to the machine by a hinge along a frame transverse axis (21) and by a primary actuator (22) arranged to swivel the movable frame about the frame transverse axis.

18. The device according to claim 17, **characterised in that** in the coupled state of the device, the primary actuator (22) can be used to adjust the working height of the apparatus (1).

19. The device according to one of claims 1 to 18, **characterised in that** it comprises, for the apparatus (1), soil engaging means (18) which define the standby position of the apparatus, suitable for performing the docking state.

20. The device according to claim 19, **characterised in that** in the standby position, the centre of gravity (G) of the apparatus (1) is offset in the opposite direction to the machine (2) with respect to a transverse vertical plane (P) passing through the primary received hitching means (14).
